(19) Europäisches Patentamt
European Patent Office
Office européen des brevets

(11) **EP 4 305 086 B1**

(12) **EUROPEAN PATENT SPECIFICATION**

(45) Date of publication and mention
of the grant of the patent:
**27.08.2025 Bulletin 2025/35**

(21) Application number: **22710412.2**

(22) Date of filing: **08.03.2022**

(51) International Patent Classification (IPC):
*C08G 18/76* $^{(2006.01)}$     *C08G 18/48* $^{(2006.01)}$
*C08G 18/18* $^{(2006.01)}$     *C08G 18/22* $^{(2006.01)}$
*C08G 18/42* $^{(2006.01)}$     *C08K 5/54* $^{(2006.01)}$
*C08G 18/10* $^{(2006.01)}$     *C08G 18/16* $^{(2006.01)}$

(52) Cooperative Patent Classification (CPC):
(C-Sets available)
**C08G 18/7664; C08G 18/10; C08G 18/163;
C08G 18/1825; C08G 18/225; C08G 18/4241;
C08G 18/485; C08G 18/4883;** C08G 2110/0025;
C08G 2110/0058; C08G 2110/0083; C08G 2330/50
(Cont.)

(86) International application number:
**PCT/EP2022/055942**

(87) International publication number:
**WO 2022/189457 (15.09.2022 Gazette 2022/37)**

(54) **PROCESS FOR PRODUCING OPEN-CELL RIGID POLYURETHANE FOAMS**

VERFAHREN ZUR HERSTELLUNG VON OFFENZELLIGEN
POLYURETHANHARTSCHAUMSTOFFEN

PROCÉDÉ DE PRODUCTION DE MOUSSES DE POLYURÉTHANE RIGIDES À CELLULES
OUVERTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2021 EP 21161602**

(43) Date of publication of application:
**17.01.2024 Bulletin 2024/03**

(73) Proprietor: **BASF SE
67056 Ludwigshafen am Rhein (DE)**

(72) Inventors:
• **WAGNER, Hendrik
49448 Lemfoerde (DE)**
• **KALUSCHKE, Tobias
49448 Lemfoerde (DE)**
• **KLASSEN, Johann
49448 Lemfoerde (DE)**

(74) Representative: **BASF IP Association
BASF SE
GBI - Z078
67056 Ludwigshafen (DE)**

(56) References cited:
CN-A- 110 818 869     US-A- 5 690 855
US-A1- 2019 389 996

(52) Cooperative Patent Classification (CPC): (Cont.)

C-Sets
**C08G 18/10, C08G 18/48**

**Description**

The present invention relates to a process for producing an open-cell rigid polyurethane foam, an open-cell rigid polyurethane foam producible by said process, its use as a core material in vacuum insulation panels, and vacuum insulation panels comprising an open-cell rigid polyurethane foam produced or producible by the process.

In recent years, vacuum insulation panels (VIP) have been increasingly used for insulation.

Such vacuum insulation units generally comprise a thermally insulating core material, for example open-cell rigid polyurethane (PU) foam, open-cell extruded polystyrene foam, silica gels, glass fibers, beds of loose plastics particles, pressed ground material made from rigid or semirigid PU foam or perlites, which is packed into a gas-tight film, evacuated and sealed e.g. by welding so as to be airtight.

On account of their lower thermal conductivity, vacuum insulation panels offer advantages over conventional insulating materials. For instance, the energy savings potential compared to closed-cell rigid polyurethane foams is about 20% to 30%. Therefore, vacuum insulation panels are used, inter alia, for housings of refrigeration equipment, containers for refrigerated vehicles or district heating pipes.

It is also possible to produce vacuum insulation units by introducing a foam system of open-cell rigid polyurethane foams directly into the interior of the double wall of a double-walled housing, for example of a refrigerator door or a refrigerator housing, where the system cures to give an open-cell foam, and subsequent evacuating of the foam. Here, a vacuum pump can be connected to the foam-filled double wall, via which the vacuum can be regenerated when necessary.

When using rigid polyurethane foams for such applications, it is essential that the cells of the foam are sufficiently open and can be evacuated in a sufficient amount of time in order to achieve complete evacuation of the vacuum insulation panel. A range of possibilities are known for this.

EP3560970A1 discloses a process for producing open-celled rigid polyurethane/polyisocyanurate foams by using phospholene oxide as a blowing agent. EP2072548B1 describes a process for producing open-cell rigid polyurethane foams using the slabstock foam process at low foaming temperatures, wherein the blowing agent used is a mixture of water and at least one physical blowing agent. In WO19110631A1, the open cell rigid foams are produced via a slabstock process by the reaction of isocyanates with polyols in the presence of a stabilizer and a cell opening additive, wherein the weight ratio of the stabilizer to the cell opening additive is in the range of 0.2 - 3.

Rigid open cell polyurethane foams derived from saccharide-based polyether polyols for insulation materials are also described in US 5 690 855 A.

For the use in vacuum insulation panels and/or vacuum insulation units, it is crucial that the rigid polyurethane foam has a sufficiently high content of open cells and can be evacuated well. Additionally, a high mechanical strength is essential for the application as core materials of the vacuum insulation panels. The use of physical blowing agents such as defined in EP2072548B1 is disadvantageous for ecological and economic reasons and does not constitute a sustainable solution.

It was therefore the object of the invention to develop a rigid polyurethane foam with a sufficient content of open cells and a good compression strength, and which is producible without using high amounts of halogenated blowing agents. It was also an object of the invention to provide a process to produce such foams and to use such foams as core materials in vacuum insulation panels.

The object was surprisingly achieved by a process for the production of an open-cell rigid polyurethane foam by reacting at least

    a. at least one polyisocyanate;
    b. a polyol composition comprising at least

        i. 30% to 75% by weight of at least one polyether polyol (b-1) having a functionality in the range of 5.0 to 7.9 and containing monomeric units derived from monosaccharides, oligosaccharides, polysaccharides and/or sugar alcohols;
        ii. >0% to 69.5% by weight of at least one polyether polyol (b-2) having an OH number in the range of >0 to 250 mg KOH/g; and
        iii. at least 0.5% by weight of water; and

    c. a cell opening agent;

where the isocyanate index is below 160 and the concentrations in % by weight for (b-1), (b-2), and water are based on the total amount of the components of the polyol composition.

The object is likewise achieved by an open-cell rigid polyurethane foam producible by the process for the production of an open-cell rigid polyurethane foam as defined above.

The object is additionally achieved by the use of the open-cell rigid polyurethane foam produced by the process as defined above as a core material for vacuum insulation panels, as well as by vacuum insulation panels comprising an open-cell rigid polyurethane foam produced by the process as defined above.

The open-cell rigid polyurethane foams according to the invention have good mechanical properties such as a good compression strength and a high content of open cells. These combinations of properties are crucial for the application as core materials for VIPs. The open-cell rigid polyurethane foams can be produced environmentally friendly and economically by using water as a blowing agent. The use of water as blowing agent leads to an effective foaming process and contributes to an efficient cell opening. This approach also allows for slabstock processes as a highly economic production process.

In the following, the invention is described in more detail.

One aspect of the present invention is a process for the production of an open-cell rigid polyurethane foam by reacting at least

    a. at least one polyisocyanate;
    b. a polyol composition comprising at least

        i. 30% to 75% by weight of at least one polyether polyol (b-1) having a functionality in the range of 5.0 to 7.9 and containing monomeric units derived from monosaccharides, oligosaccharides, polysaccharides and/or sugar alcohols;
        ii. >0% to 69.5% by weight of at least one polyether polyol (b-2) having an OH number in the range of >0 to 250 mg KOH/g; and
        iii. at least 0.5% by weight of water; and

    c. a cell opening agent;

where the isocyanate index is below 160 and the concentrations in % by weight for (b-1), (b-2), and water are based on the total amount of the components of the polyol composition.

The term "polyurethane" is known by the person skilled in the art as including not only polymers containing urethane groups but as also including polymers containing no or very low amounts of urethane groups, as long as these polymers are derived from difunctional or polyfunctional isocyanates, see Polyurethane Handbook, 2nd edition 1993, editor Guether Oertel, Carl Hanser Verlag Munich, Chapter 2.1.1. Examples are polyetherureas, polyisocyanurates, polyureas and polycarbodiimides.

The rigid polyurethane (PU) foams produced by the process according to the invention are open-cell. The term "open-cell" is understood within the context of the present invention to mean that at least 80%, preferably at least 90% and particularly preferably at least 95% of the cells of the foam are open. The open-cell content is determined according to DIN ISO 4590.

The open-cell rigid polyurethane foams produced according to the present process are preferably used as core materials in vacuum insulation panels.

The process for the production of the open-cell rigid polyurethane foams is preferably a discontinuous process, more preferably a slabstock process. "Discontinuous process" means that at least two articles are produced one after the other, wherein the injection of the polyurethane reaction mixture is interrupted after the production of the first article and is continued for the second article, i.e. a first article is produced by injecting the polyurethane foam reaction mixture and the injection is stopped after injection of a sufficient amount of the polyurethane foam reaction mixture into the first article. The injection is continued with the next article to be produced. The slabstock process is a discontinuous process, in which large blocks, for example 2 m x 1.2 m x 1.2 m, are produced. During the process, the components (b) to (g) and the at least one polyisocyanate are mixed and the mixture is introduced into a mold in which is cures to give the foam. The size of the mold depends on the intended size of the foam block. After curing the foam, the block is removed from the mold. It can then be cut into pieces that are required for producing the vacuum insulation panels. When foaming, the mold is preferably lined with a film before the foaming in order to prevent wetting and hence adhesion of the foam into the mold wall. In case of a slabstock process, the reaction mixture is free-foamed, i.e. the foam is not confined in all dimensions, but instead can expand freely in at least one dimension. The slabstock process is known and is described e.g. in Polyurethane Handbook, Chapter 5.1.1, 2nd edition 1993, editor Guether Oertel, Carl Hanser Verlag Munich.

The open-cell rigid polyurethane foam preferably has an overall density of at least 30 kg/m$^3$, more preferred at least 40 kg/m$^3$, even more preferred at least 45 kg/m$^3$. The maximal overall density of the open-cell rigid polyurethane foam is 100 kg/m$^3$, more preferred 90 kg/m$^3$, even more preferred 80 kg/m$^3$. Preferably, the open-cell rigid polyurethane foam has an overall density in the range of 30 to 100 kg/mm$^3$, more preferred 40 to 90 kg/mm$^3$, and in particular 45 to 80 kg/mm$^3$. The density is determined by determining the weight of a cube cut out from a foam block and having an edge length of at least 10 cm in accordance with DIN EN ISO 845.

The vacuum insulation panels are produced by enveloping the open-cell rigid polyurethane foam with a gas-impermeable film, closing it e.g. by welding, and evacuating it.

In a preferred embodiment of the present production process, the components (b), (c), and other components such as additives and auxiliaries, if present, are mixed to give a what is called a polyol component. The polyol component is then reacted with the at least one polyisocyanate.

Polyol composition (b)

The polyol composition (b) according to the present invention comprises at least (i) at least one polyether polyol (b-1), (ii) at least one polyether polyol (b-2), and (iii) water.

In the process for the production of the open-cell rigid polyurethane foams according to the invention, the polyol composition (b) comprises isocyanate reactive compounds. The term isocyanate reactive compounds means that the compounds contain at least two groups that are reactive towards isocyanate. Preferably, the isocyanate reactive groups comprise a reactive hydrogen, e.g. the isocyanate reactive group may be selected from OH-, SH-, NH-, and CH-acid groups.

A polyether polyol in the context of the present invention is an organic compound that contains at least ether and OH groups as functional groups. Polyether polyols are reaction products of compounds with at least two alkylene oxide reactive OH groups with alkylene oxides. The compounds with at least two alkylene oxide reactive OH groups are also called starter compounds, starting compounds, or starters within the scope of the present invention. The term starter compound comprises the terms starter compound and starter compounds. In the reaction with the alkylene oxides, the alkylene oxides are added to the starter compound(s), this generally taking place with use of a catalyst. One or several starter compounds can take part in the reaction. This reaction is known per se to those skilled in the art.

Preference is given to using one or more compounds having from 2 to 4 carbon atoms in the alkylene radical, also called $C_2$ to $C_4$ alkylene oxides, e.g. ethylene oxide, 1,2-propylene oxide, tetrahydrofuran, 1,3-propylene oxide, 1,2- or 2,3-butylene oxide, in each case either alone or in the form of mixtures, particularly preferably ethylene oxide and/or 1,2-propylene oxide, as alkylene oxides.

Based on the total weight of the polyol composition (b), the amount of the at least one polyether polyol (b-1) is at least 30 % by weight, preferably at least 40 % by weight, more preferred at least 45 % by weight, even more preferred at least >55 % by weight. The amount of the at least one polyether polyol (b-1) is at most 75 % by weight, preferably at most 70 %, more preferred at most 65 % by weight, even more preferred at most <65 % by weight, based on the total weight of the polyol composition (b). The amount of the at least one polyether polyol (b-1) is in the range of 30 % to 75 % by weight, more preferred 40 % to 70 % by weight, even more preferred 45 % to 65 % by weight, even more preferred 45 % to <65 % by weight, particularly preferred >55 % to <65 % by weight, based on the total weight of the polyol composition (b).

Based on the total weight of the polyol composition (b), the amount of the at least one polyether polyol (b-2) is at least >0 % by weight, preferably at least 10 % by weight, more preferred at least 20 % by weight. The amount of the at least one polyether polyol (b-2) is at most 69.5 % by weight, preferably at most 50 % by weight, more preferred at most 40 % by weight, based on the total weight of the polyol composition (b). The amount of the at least one polyether polyol (b-2) is in the range of >0 % to 69.5 % by weight, more preferred 10 % to 50 % by weight, even more preferred 20 % to 40 % by weight, based on the total weight of the polyol composition (b).

The polyether polyol (b-1) and the polyether polyol (b-2) are different from each other according to the present invention.

The OH number is determined according to DIN 53240 (1971-12).

The functionality of a polyol, especially of the polyether polyols (b-1) and (b-2) and other polyols to be used according to the invention, within the context of the present invention means the number of alkylene oxide reactive hydrogen atoms per mole of starter compound or per mole of mixture of the starter compounds prior to the time of alkylene oxide metering. The time of the alkylene oxide metering is in this case the start of the addition of the alkylene oxide component to the starter compound(s). The calculation takes into account all alkylene oxide-reactive hydrogen atoms of the starter compound(s) that are present in the starter mixture.

The functionality F in the context of the present invention is calculated according to the following formula (I):

$$F = \frac{\sum_{i=1}^{m} n_i \cdot f_i}{\sum_{i=1}^{m} n_i}$$

$n_i$ = moles of starter i
$f_i$ = functionality of starter i
$m$ = number of starters in the starter mixture
F = functionality

The functionality F of a polyol produced from a mixture of two starter compounds (m=2) is calculated as follows:

F = (moles of starter compound A * functionality of starter compound A + moles of starter compound B * functionality of starter compound B)/(moles of starter A + moles of starter B).

The formula can be amended accordingly for other starter molecules. Thus, for example, a polyether polyol has a functionality of 5.12 when 626.48 mol of glycerol (functionality 3), 559.74 mol of sucrose (functionality 8) and 67.31 mol of dimethylethanolamine (functionality 1) are used.

The functionality F determined by the formula presented above is also called equivalent functionality or average functionality and is known to those skilled in the art as a readily accessible method for determining the functionality of polyols, see M. Ionescu "Chemistry and Technology of Polyols for Polyurethanes", 2005, Rapra Technology Limited, pages 34 to 39.

The functionality of the polyether polyols (b-1) and (b-2) as well as other polyols, as defined above according to the invention, can differ from the functionality after commencement of the addition of at least one alkylene oxide, that is, during the reaction of the at least one alkylene oxide with a starter compound, or of the reaction product, since during the reaction there is formation of by-products such as glycols and unsaturated monofunctional constituents. The side-reactions are known in the literature. The functionality of the polyether polyols (b-1) and (b-2) as well as other polyols can thus also be referred to as the functionality of the starter compound or starter compound mixture used for the preparation of the respective polyol.

Polyether polyol (b-1)

The polyether polyol (b-1) contains monomeric units derived from monosaccharides, oligosaccharides, polysaccharides, and/or sugar alcohols. The term "monomeric unit" as used herein means any monomeric unit derived from a compound used for the preparation of the polyol, i.e. monomeric units derived from/stemming from any starter compound and monomeric units derived from the alkylene oxide used. The term "contains monomeric units derived from monosaccharides, oligosaccharides, polysaccharides, and/or sugar alcohols" as used herein means that at least one starter compound $S^{(b-1)}$ of the polyether polyol (b-1) is a monosaccharide, oligosaccharide, polysaccharide, and/or a sugar alcohol.

Preferably, the polyether polyol (b-1) is a reaction product of monosaccharides, oligosaccharides, polysaccharides, sugar alcohols, alkoxylation products of the aforementioned compounds, mixtures thereof, or mixtures of the aforementioned compounds with polyhydric alcohols or their alkoxylation products and optionally other starting compounds or their alkoxylation products with $C_2$ to $C_4$ alkylene oxides.

Preferably, the polyether polyol (b-1) is a reaction product of monosaccharides, oligosaccharides, polysaccharides, sugar alcohols, alkoxylation products of the aforementioned compounds, mixtures thereof or mixtures of the aforementioned compounds with polyhydric alcohols or their alkoxylation products with $C_2$ to $C_4$ alkylene oxides.

Possible starter compounds $S^{(b-1)}$ of the polyether polyol (b-1) are monosaccharides, oligosaccharides, polysaccharides, sugar alcohols, alkoxylation products of the aforementioned compounds, polyhydric alcohols, their alkoxylation products, and mixtures thereof, wherein at least one starter compound $S^{(b-1)}$ of the polyether polyol (b-1) is a monosaccharide, oligosaccharide, polysaccharide, and/or a sugar alcohol.

The monosaccharides, oligosaccharides, polysaccharides, sugar alcohols, other polyhydric alcohols, and mixtures thereof can be reacted with alkylene oxides as described above to form alkoxylation products. The alkoxylation products are usually prepared using $C_2$ to $C_4$ alkylene oxides, preferably using ethylene oxide and/or propylene oxide. The alkoxylation products are then once again reacted, as starter compounds $S^{(b-1)}$, with alkylene oxides in the preparation of the polyether polyols (b-1). The use of the alkoxylation products as starter compounds $S^{(b-1)}$ is particularly advantageous when further starter compounds $S^{(b-1)}$ which are initially present as a solid or have a high viscosity are employed.

Examples of suitable starter compounds $S^{(b-1)}$ of the polyether polyol (b-1) are sugar derivatives such as sucrose, lactose, maltose, glucose, allose, altrose, gulose, idose, galactose, talose, fructose, sorbose, tagatose, mannose, psicose, hexitol derivatives such as sorbitol, mannitol, and other dihydric or polyhydric alcohols like ethylene glycol, diethylene glycol, triethylene glycol, propylene glycol, dipropylene glycol, tripropylene glycol, glycerol, trimethylolpropane, butane-1,4-diol, butane-1,3-diol, butane-1,2-diol, butane-2,3-diol, butane-1,2,4-triol, pentane-1,3,5-triol, erythritol, and pentaerythritol, wherein at least one starter compound is a monosaccharide, oligosaccharide, polysaccharide, and/or a sugar alcohol.

Preferably, the monosaccharides, oligosaccharides, polysaccharides and/or sugar alcohols are selected from the group consisting of sucrose, lactose, maltose, glucose, allose, altrose, gulose, idose, galactose, talose, fructose, sorbose, tagatose, mannose, psicose, and sorbitol. Particularly preferred are sucrose and sorbitol. Sucrose is very particularly preferred.

It is preferred that at least one starter compound $S^{(b-1)}$ of the polyether polyol (b-1) is a polyhydric alcohol. Preferably, the polyether polyol (b-1) contains monomeric units derived from polyhydric alcohols selected from the group consisting of ethylene glycol, diethylene glycol, triethylene glycol, propylene glycol, dipropylene glycol, tripropylene glycol, glycerol, trimethylolpropane, butane-1,4-diol, butane-1,3-diol, butane-1,2-diol, butane-2,3-diol, butane-1,2,4-triol, pentane-1,3,5-triol, pentaerythritol, and erythritol. Particularly preferred polyhydric alcohols are diethyleneglycol, dipropylene gylcol, trimethylpropane, and glycerol; glycerol is very particularly preferred.

In a preferred embodiment, the starter compounds $S^{(b-1)}$ of the polyether polyol (b-1) are selected from the group consisting of glycerol, sucrose, and sorbitol. Particularly preferred are starter mixtures comprising glycerol and sucrose.

Preferably, the amount of monosaccharides, oligosaccharides, polysaccharides, and/or sugar alcohols is at least 30 % by weight and at most 70 % by weight based on the total amount of the polyether polyol (b-1).

The catalyst is optionally employed in addition to the components bi), bii), and biii).

Basic compounds are employed in most cases as alkoxylation catalysts for the reaction of the starter compound(s) $S^{(b-1)}$ with alkylene oxide(s). In industrial processes, these are mostly hydroxides of alkali metals, such as for example sodium, cesium or in particular potassium hydroxide. Alkali metal alkoxides, such as for example sodium methoxide, sodium or potassium methoxide or potassium isopropoxide, are known as catalysts. Preparation can also be affected with amine catalysts.

The amine catalysts are preferably selected from the group comprising trialkylamines, such as for example trimethylamine, triethylamine, tripropylamine and tributylamine; dimethylalkylamines, such as for example dimethylethanolamine, dimethylcyclohexylamine, dimethylethylamine and dimethylbutylamine; aromatic amines, such as for example dimethylaniline, dimethylaminopyridine, dimethylbenzylamine, pyridine, imdazoles, such as for example imidazole, 4(5)-methylimidazole, 3-methylimidazole and 1-hydroxypropylimidazole; guanidines and amidines, such as for example 1,5-diazabicyclo[4.3.0]non-5-ene and 1,5-diazabicyclo[5.4.0]undec-7-ene. The catalyst is preferably selected from dimethylethanolamine and imidazole.

The adduct formation with the alkylene oxides is preferably conducted at a temperature between 90 and 150° C and a pressure between 0.1 to 8 bar. The metering of the alkylene oxides is typically followed by a post-reaction phase, in which the alkylene oxide is depleted by reaction. If necessary, a post-reaction phase can follow thereafter. Distillation typically follows to separate off volatile constituents, preferably under reduced pressure.

Especially when using solid starter compounds, such as for example sucrose, for the preparation of the polyether polyol (b-1) according to the invention, only slow metering rates are possible at the start of the process, since the alkylene oxide dissolves only poorly in the reaction mixture and leads to slow reaction rates. Moreover, the high viscosity arising when using solid starter compounds in the starter mixture ensures relatively poor dissipation of heat. This can lead to local instances of overheating, which has a negative impact on the product quality. Moreover, the high viscosity hastens wear and tear of pumps and heat exchangers. By adding at least one further polyol to the starter mixture, the negative effects can be reduced. This is described, for example, in EP 2542612. In some of the experiments described, the mixtures of the starter compounds were admixed with polyetherols in order to reduce the viscosity of the starting mixture and enable a better process regime.

Alkoxylation products of monosaccharides, oligosaccharides, polysaccharides, polyhydric alcohols or mixtures thereof are preferably added during the preparation of the polyetherols (b-1) for the reduction of viscosity.

When calculating the functionality of the polyether polyol (b-1) according to the invention, the above-mentioned alkoxylation products are correspondingly taken into account.

The functionality of the polyether polyol (b-1) is at least 5.0, preferably at least 5.1, more preferred at least 5.2, even more preferred at least 5.5. The functionality of the polyether polyol (b-1) is at most 7.9. The functionality of the polyether polyol (b-1) is in the range of 5.0 to 7.9, more preferred 5.1 to 7.9, even more preferred 5.2 to 7.9, very particularly preferred 5.5 to 7.9.

The OH number of the polyether polyol (b-1) is at least 300 mg KOH/g, preferably at least 350 mg KOH/g, more preferred at least 380 mg KOH/g. The OH number of the polyether polyol (b-1) is at most 490 mg KOH/g, more preferred at most 460 mg KOH/g. The OH number of the polyether polyol (b-1) is in the range of 300 to 490 mg KOH/g, more preferred 350 to 490 mg KOH/g, even more preferred 380 to 460 mg KOH/g.

In a preferred configuration, the functionality is in the range of from 5.1 to 7.9 and the OH value in the range of from 350 to 490 mg KOH/g, even more preferred the functionality is in the range of from 5.2 to 7.9 and the OH value in the range of from 350 to 490 mg KOH/g, in particular the functionality is in the range of 5.5 to 7.9 and the OH value in the range of from 380 to 460 mg KOH/g.

Polyether polyol (b-2)

The polyether polyol (b-2) is preferably a reaction product of amines, polyhydric alcohols, alkoxylation products of the aforementioned products or mixtures thereof with $C_2$ to $C_4$ alkylene oxides. Possible starter molecules $S^{(b-2)}$ for the polyether polyol (b-2) are, for example, ethylene glycol, diethylene glycol, triethylene glycol, propylene glycol, dipropylene glycol, tripropylene glycol, glycerol, trimethylolpropane, butane-1,4-diol, butane-1,3-diol, butane-1,2-diol, butane-2,3-diol,butane-1,2,4-triol, pentane-1,3,5-triol, erythritol, pentaerythritol, also methylamine, ethylamine, isopropylamine, butylamine, benzylamine, aniline, toluidine, toluenediamine, in particular vicinal toluenediamine, naphthylamine, ethylenediamine, di-ethylenetriamine, 4,4'-methylenedianiline, 1,3,-propanediamine, 1,6-hexanediamine, ethanolamine, diethanolamine, triethanolamine and other dihydric or polyhydric alcohols or monofunctional or polyfunctional amines.

The polyether polyol (b-2) preferably contains monomeric units derived from polyhydric alcohols selected from the group consisting of ethylene glycol, diethylene glycol, triethylene glycol, propylene glycol, dipropylene glycol, tripropylene glycol, glycerol, trimethylolpropane, butane-1,4-diol, butane-1,3-diol, butane-1,2-diol, butane-2,3-diol,butane-1,2,4-triol, and pentane-1,3,5-triol. The polyether polyol (b-2) may preferably contain monomeric units derived from vicinal toluenediamine, naphthylamine, ethylenediamine, di-ethylenetriamine, 4,4'-methylenedianiline, 1,3-propanediamine, 1,6-hexanediamine, ethanolamine, diethanolamine, and/or triethanolamine. Particularly preferably, the polyether polyol (b-2) contains monomeric units derived from compounds selected from the group consisting of glycerol, dipropylene glycol, trimethylolpropane, and/or vicinal toluenediamine.

The polyether polyol (b-2) has an OH number of at least >0 mg KOH/g, preferably at least 50 mg KOH/g, more preferred at least 100 mg KOH/g, more preferred at least >100 mg KOH/g. The polyether polyol (b-2) has an OH number of at most 250 mg KOH/g, preferably at most 225 mg KOH/g, more preferred at most 200 mg KOH/g, even more preferred at most 185 mg KOH/g. The OH number of the polyether polyol (b-2) is in the range of >0 to 250 mg KOH/g, more preferred in the range of 50 to 225 mg KOH/g, even more preferred in the range of 100 to 200 mg KOH/g, even more preferred in the range of >100 to 200 mg KOH/g, particularly preferred in the range of >100 to 185 mg KOH/g.

The polyether polyol (b-2) preferably has a functionality of at least 1.9. The functionality of the polyether polyol (b-2) is at most 6.5, preferably at most 5, more preferred at most 4.

In a preferred configuration, the polyether polyol (b-2) has a functionality in the range of 1.9 to 6.5 and an OH number in the range of >0 to 250 mg KOH/g, more preferred the polyether polyol (b-2) has a functionality in the range of 1.9 to 5 and an OH number in the range of 50 to 225 mg KOH/g, even more preferred the polyether polyol (b-2) has a functionality in the range of 1.9 to 4 and an OH number in the range of 100 to 200 mg KOH/g.

Further isocyanate reactive compounds

It is possible that the polyol composition (b) comprises additional components to (b-1), (b-2), and water. For example, the polyol composition may comprise one or more further isocyanate reactive compounds containing at least two groups that are reactive towards isocyanate. Preferably, the isocyanate reactive groups comprise a reactive hydrogen, e.g. the isocyanate reactive group may be selected from OH-, SH-, NH-, and CH-acid groups. Preferably, the further isocyanate reactive compound is a polyol. For example, it may be selected from the group consisting of polyether polyols, polyester polyols, polyether ester polyols, and mixtures thereof.

A polyester polyol in the context of the invention is an organic compound that contains at least ester and OH groups as functional groups. The polyester polyol typically has 2 to 10 OH groups, preferably 2 to 6 OH groups, particularly preferably 2 to 4 OH groups.

A polyether ester polyol in the context of the invention is an organic compound that contains at least ether, ester and OH groups as functional groups. The polyester ether polyol typically has 2 to 20 OH groups, preferably 2 to 10 OH groups, particularly preferably 2 to 8 OH groups.

Polyether polyol

The OH number of the further polyether polyol compounds optionally comprised in the polyol composition (b) is usually at least >0 mg KOH/g, preferably at least 20 mg KOH/g, more preferred at least 50 mg KOH/g. The OH number of the further polyether polyol compounds optionally comprised in the polyol composition (b) is usually at most 1000 mg KOH/g, preferably at most 850 mg KOH/g, mor preferred at most 600 mg KOH/g. Preferably, the OH number of the further polyol compounds optionally comprised in the polyol composition (b) is in the range from >0 to 1000 mg KOH/g, preferably in the range from 20 to 850 mg KOH/g, most preferably in the range from 50 to 600 mg KOH/g.

Possible starter compounds for further polyether polyols optionally comprised in the polyol composition (b) are, for example, ethylene glycol, diethylene glycol, glycerol, trimethylolpropane, pentaerythritol, sugar derivatives such as sucrose, hexitol derivatives such as sorbitol, also methylamine, ethylamine, isopropylamine, butylamine, benzylamine, aniline, toluidine, toluenediamine, in particular vicinal toluenediamine, naphthylamine, ethylenediamine, di-ethylenetriamine, 4,4'-methylenedianiline, 1,3,-propanediamine, 1,6-hexanediamine, ethanolamine, diethanolamine, triethanolamine and other dihydric or polyhydric alcohols or monofunctional or polyfunctional amines. Preference is given to ethylene glycol, diethylene glycol, glycerol, trimethylolpropane, pentaerythritol, sugar derivatives such as sucrose, hexitol derivatives such as sorbitol, and TDA, preferably vic-TDA.

Polyester polyol

The polyol composition (b) may comprise at least one polyester polyol. Polyester polyols are a well-known class of compounds which can, for example, be used in the synthesis of polyurethanes (PU). They are obtainable by polycondensation reactions between dicarboxylic acids (or their derivatives such as esters and anhydrides) and polyols like diols, triols or higher polyols, or hydroxy carboxylic acids, or by the ring opening polymerization of cyclic esters (e. g. lactones, cyclic carbonates); this is, for example, described in M. Ionescu, "Chemistry and technology of polyols for polyurethanes", Rapra Technology Ltd., 2005, chapter 8.1.

The polyester polyols used are usually prepared by condensation of polyfunctional alcohols having from 2 to 12 carbon atoms, e.g. ethylene glycol, diethylene glycol, butanediol, trimethylolpropane, glycerol or pentaerythritol, with polyfunctional carboxylic acids having from 2 to 12 carbon atoms, for example succinic acid, glutaric acid, adipic acid, suberic acid, azelaic acid, sebacic acid, decanedicarboxylic acid, maleic acid, fumaric acid, phthalic acid, isophthalic acid, terephthalic acid, the isomers of naphthalenedicarboxylic acids or the anhydrides of the acids mentioned. As further starting materials in the preparation of the polyesters, it is also possible to make concomitant use of hydrophobic materials. The hydrophobic materials are water-insoluble materials which comprise a nonpolar organic radical and have at least one reactive group selected from hydroxyl, carboxylic acid, carboxylic ester or mixtures thereof. The equivalent weight of the hydrophobic materials is preferably in the range from 130 to 1000 g/mol. It is possible to use, for example, fatty acids such as stearic acid, oleic acid, palmitic acid, lauric acid or linoleic acid and also fats and oils such as castor oil, maize oil, sunflower oil, soybean oil, coconut oil, olive oil or tall oil.

The materials used in the preparation of the polyester polyol are called starter materials or starting materials.

Preferred polyfunctional alcohols used in the preparation of the polyester polyol are $C_2$ to $C_{12}$ diols, triols, and tetraols like ethylene glycol, 1,2- and 1,3-propylene glycol, 1,4-butanediol, 1,5-pentanediol, 1,6-hexanediol, 2-methyl-1,3-propanediol, 2,2-dimethyl-1,3-propanediol, 3-methyl-1,5-pentanediol, 2-butyl-2-ethyl-1,3-propanediol, decanediol, dodecanediol, glycerol, trimethylolpropane, pentaerythritol, alkoxylation products of the aforementioned compounds, and mixtures thereof.

The term "alkoxylation products" as used herein refers to the reaction products of $C_2$ to $C_{12}$ diols, triols and tetraols with one or more $C_2$ to $C_4$ alkylene oxides like ethylene oxide, propylene oxide and/or butylene oxide, preferably with ethylene oxide and/or propylene oxide. Examples of such alkoxylation products are diethylene glycol, triethylene glycol, dipropylene glycol and tripropylene glycol.

Particularly preferred polyfunctional alcohols used in the preparation of the polyester polyol are 1,4-butane diol, dipropylene glycol, and pentaerythritol.

Preferred acids and hydrophobic materials used in the preparation of the polyester polyol are malonic acid, succinic acid, glutaric acid, adipic acid, pimelic acid, suberic acid, azelaic acid, sebacic acid, decane dicarboxylic acid, maleic acid, fumaric acid, dodecane dicarboxylic acid, the isomers of naphthalene dicarboxylic acid, phthalic acid, isophthalic acid, and terephthalic acid; monoesters, diesters and anhydrides of these acids such as phthalic anhydride; mixtures thereof; stearic acid, oleic acid, palmitic acid, lauric acid, linoleic acid, castor oil, maize oil, sunflower oil, soybean oil, coconut oil, olive oil, and tall oil.

Particularly preferred acids and hydrophobic materials used in the preparation of the polyester polyol are succinic acid, glutaric acid, adipic acid, oleic acid, castor oil, and soybean oil.

The polyester polyol is preferably selected from the reaction products of

I) 5% to 20% by weight of at least one polyfunctional alcohol, preferably selected from pentaerythritol, 1,4-butanediol, and/or dipropylene glycol;
II) 0% to 15% by weight of at least one compound with at least two groups selected from carboxylic acid groups and carboxylic acid ester groups, wherein two carboxylic acid groups may form a carboxylic anhydride group, preferably selected from succinic acid, glutaric acid, and/or adipic acid;
III) 65% to 95% by weight of at least one fatty acid, fat or oil, preferably selected from oleic acid, castor oil, and soybean oil;

where the sum of I), II), and III) is 100 % by weight, plus any catalyst used.

Preferably, the starter materials of the polyester polyol comprise one dicarboxylic acid, one fatty acid, and one polyfunctional alcohol.

The polyester polyol is particularly preferably selected from the reaction products of

1) 5% to 20% by weight of pentaerythritol, 1,4-butanediol, and/or dipropylene glycol
2) 0% to 15% by weight of succinic acid, glutaric acid, and/or adipic acid; and/or
3) 65% to 95% by weight of oleic acid, castor oil, and/or soybean oil

where the sum of 1), 2), and 3) is 100 % by weight, plus any catalyst used.

The catalyst is optionally employed in addition to the components 1), 2), and 3). Preferred catalysts are known to the skilled person of the art.

The polyester polyol preferably has a functionality of at least 1.5, more preferred at least 1.8, particularly preferably at least 2.5. The polyester polyol preferably has a functionality of at most 4.5, more preferred at most 3.8, particularly preferably at most 3.5. Preferably, the polyester polyol has a functionality in the range of 1.5 to 4.5, more preferred 1.8 to 3.8, particularly preferably 2.5 to 3.5.

The polyester polyol preferably has an OH number of at least <0 mg KOH/g, more preferred at least 10 mg KOH/g, even more preferred at least 15 KOH/g. The OH number of the polyester polyol is preferably at most 100 mg KOH/g, more preferred at most 75 mg KOH/g, even more preferred at most 50mg KOH/g. Preferably, the polyester polyol has an OH number in the range of <0 to 100 mg KOH/g, more preferred in the range of 10 to 75 mg KOH/g, even more preferred in the range of 15 to 50 mg KOH/g.

In one preferred embodiment, the polyol composition (b) comprises a polyester polyol as described above. Based on the total weight of the polyol composition (b), the amount of the polyester polyol is preferably at least 1 % by weight, more preferred at least 2.5 % by weight, even more preferred at least 3.5 % by weight, at most 15 % by weight, more preferably at most 10 % by weight, even more preferably at most 8 % by weight. Preferably, the amount of the polyester polyol is in the range of 1 % to 15 % by weight, more preferred in the range of 2.5 % to 10 % by weight, even more preferred in the range of 3.5 % to 8 % by weight, based on the total weight of the polyol composition (b).

Polyetherester polyols

Polyetherester polyols are obtainable by the reaction of i) at least one hydroxyl-containing starter molecule; ii) of one or more fatty acids, fatty acid monoesters or mixtures thereof; iii) of one or more alkylene oxides having 2 to 4 carbon atoms. The polyetherester polyols have preferably a functionality in between 2.3 to 5.0, more preferably in between 3.5 to 4.7.

The starter compounds of component i) are generally selected such that the functionality of component i) is preferably 3.8 to 4.8, more preferably 4.0 to 4.7, even more preferably 4.2 to 4.6. Optionally, a mixture of suitable starter compounds is used.

Preferred hydroxyl-containing starter compounds of component i) are selected from the group consisting of sugars and sugar alcohols (glucose, mannitol, sucrose, pentaerythritol, sorbitol), polyhydric phenols, resols, e.g., oligomeric condensation products formed from phenol and formaldehyde, trimethylolpropane, glycerol, glycols such as ethylene glycol, propylene glycol and their condensation products such as polyethylene glycols and polypropylene glycols, e.g., diethylene glycol, triethylene glycol, dipropylene glycol, and water.

Said fatty acid or fatty acid monoester ii) is generally selected from the group consisting of polyhydroxy fatty acids, ricinoleic acid, hydroxyl-modified oils, hydroxyl-modified fatty acids and fatty acid esters based in myristoleic acid, palmitoleic acid, oleic acid, stearic acid, palmitic acid, vaccenic acid, petroselic acid, gadoleic acid, erucic acid, nervonic acid, linoleic acid, $\alpha$- and $\gamma$-linolenic acid, stearidonic acid, arachidonic acid, timnodonic acid, clupanodonic acid and cervonic acid. The fatty acid methyl esters are the preferred fatty acid monoesters. Preferred fatty acids are stearic acid, palmitic acid, linolenic acid and especially oleic acid, monoesters thereof, preferably methyl esters thereof, and mixtures thereof. Fatty acids are preferably used as purely fatty acids.

Suitable alkylene oxides iii) having 2 to 4 carbon atoms are, for example, ethylene oxide, propylene oxide, tetrahydrofuran, 1,2-butylene oxide, 2,3-butylene oxide and/or styrene oxide. Alkylene oxides can be used singly, alternatingly in succession or as mixtures.

Blowing agent

According to the invention, the polyol composition (b) comprises at least 0.5 % by weight water which acts as a chemical blowing agent. "Chemical blowing agent" is understood to mean compounds that form gaseous products by reaction with isocyanate. Examples of chemical blowing agents are water and acids, in particular formic acid and mixtures of water and acids.

Based on the total weight of the polyol composition (b), the amount of water is at least 0.5 % by weight, preferably at least 0.6 % by weight, more preferred at least 1 % by weight, even more preferred at least 1.5 % by weight. The amount of water is preferably at most 5 % by weight, more preferred at most 4.5% by weight, even more preferred at most 4 % by weight. Preferably, the amount of water is in the range of 0.5 % to 5 % by weight, more preferred in the range of 0.6 % to 5 % by weight, even more preferred in the range of 1 % to 4.5 % by weight, particularly preferred in the range of 1.5 % to 4 % by weight.

According to one embodiment, a physical blowing agent and/or a further chemical blowing agent other than water can be present in the reaction during the process for the production of the open-cell rigid polyurethane foam. Suitable physical blowing agents that can be used are in general all hydrocarbons known to those skilled in the art as blowing agents, for example non-halogenated and halogenated, preferably fluorinated, alkenes. Examples of fluorinated alkenes are propenes, butenes, pentenes and hexenes having 3 to 6 fluorine substituents, where other substituents such as chlorine may be present, for example tetrafluoropropenes, fluorochloropropenes, for example trifluoromonochloropropenes, pentafluoropropenes, fluorochlorobunetes, hexafluorobutenes or mixtures thereof. Examples of non-halogenated hydrocarbon blowing agents are acyclic pentane isomers and/or cyclopentane, especially cyclopentane. Preference is given to using acyclic pentane isomers and/or cyclopentane in the range of from 9% to 17% by weight, based on the total amount of the polyurethane reaction mixture. Preference is given to cyclopentane and mixtures of isopentane with cyclopentane having a content of at least 70% by weight of cyclopentane, and particular preference is given to using cyclopentane having a purity of at least 90% by weight, especially of at least 95% by weight. Preferably, the physical blowing agent is a non-halogenated hydrocarbon.

In a preferred embodiment, the amount of the physical blowing agent is in the range of ≥0 to 35 pbw with respect to 100 parts of the polyol composition (b).

In a preferred embodiment, the blowing agent in the process for the production of the open-cell rigid polyurethane foam is selected from water and mixtures of water with one or more further chemical blowing agents. Very particularly preferably, water is the only blowing agent in the reaction in the process for the production of the open-cell rigid polyurethane foam.

The total amount of water used in the process for the production of the open-cell rigid polyurethane foam is at least 0.5 % by weight, more preferably at least 1 % by weight, even more preferably at least 1.5 % by weight. The total amount of chemical blowing agents used in the process for the production of the open-cell rigid polyurethane foam is preferably at most 6 % by weight, more preferably at most 5 % by weight, even more preferably at most 4 % by weight based on the total weight of the components of the polyol composition (b). Preferably, the total amount of the blowing agents used in the process for the production of the open-cell rigid polyurethane foam is in the range of 0.5 % to 6 % by weight, more preferably in the range of 1 % to 5 % by weight, even more preferably in the range of 1.5 % to 4 % by weight based on the total weight of the components of the polyol composition (b).

Cell opening agent (c)

Cell opening agents, also called cell openers, are used to increase the number of open cells.

These are preferably compounds which influence the surface tension of the components during the foaming. One cell opening agent or a mixture of cell opening agents can be used.

The cell opening agent may be selected from macromolecular compounds or mixtures of macromolecular compounds based at least partially on saturated or unsaturated hydrocarbons or siloxane motifs; esters, preferably esters of a carboxylic acid, in combination with macromolecular, saturated hydrocarbons; mixtures of macromolecular unsaturated hydrocarbons with a phthalic ester; polyester polyols containing surfactant motifs; polyester polyols containing monomeric units derived from a dicarboxylic acid, a fatty acid, and a polyfunctional alcohol; and/or prepolymers comprising a polyisocyanate and a polyester polyol containing surfactant motifs, preferably prepolymers comprising a polyisocyanate and a polyester polyol containing monomeric units derived from a dicarboxylic acid, a fatty acid, and a polyfunctional alcohol.

Preferably, the cell opening agent is selected from macromolecular compounds or mixtures of macromolecular compounds based at least partially on saturated or unsaturated hydrocarbons or silioxane motifs; polyester polyols containing monomeric units derived from a dicarboxylic acid, a fatty acid, and a polyfunctional alcohol; and/or prepolymers comprising a polyisocyanate and a polyester polyol containing monomeric units derived from a dicarboxylic acid, a fatty acid, and a polyfunctional alcohol.

In one embodiment, the cell opening agent is a macromolecular compound or a mixture of macromolecular compounds based at least partially on saturated or unsaturated hydrocarbons or siloxane motifs.

In one embodiment, the cell opening agent is an ester, particularly preferably an ester of a carboxylic acid, in combination with macromolecular, saturated hydrocarbons.

In one embodiment, the cell opening agent is a mixture of macromolecular unsaturated hydrocarbons with a phthalic ester.

In one embodiment, the cell opening agent is a polyester polyol containing surfactant motifs. Preferably, the cell opening agent is a polyester polyol containing monomeric units derived from a dicarboxylic acid, a fatty acid, and a polyfunctional alcohol.

In one embodiment, the cell opening agent is a prepolymer comprising a polyester polyol containing surfactant motifs and a polyisocyanate. Preferably, the polyester polyol contains monomeric units derived from a dicarboxylic acid, a fatty acid, and a polyfunctional alcohol. Preferably, the polyisocyanate is selected from the group consisting of methylene diphenyl diisocyanates and/or its polymeric derivatives. Prepolymers in general are described below.

The cell opening agent may be added into the polyol composition (b), the polyol component comprising the polyol composition (b), or the isocyanate component comprising the polyisocyanate (a). If the cell opening agent is a prepolymer which is used as the polyisocyanate in the reaction as defined below, said polyisocyanate can take over the function of the cell opening agent (c), and thus no additional cell opening agent needs to be applied in this case.

Further auxiliaries and/or additives

In a preferred embodiment, the polyol composition (b) may comprise the cell opening agent (c) as well as other components such as additives and auxiliaries.

Further auxiliaries and/or additives can optionally be added to the reaction mixture for producing the rigid polyurethane foams. Mention may be made of, for example, catalysts, foam stabilizers, surface-active substances, antioxidants, chain extenders, cross linkers, cell regulators, fillers, dyes, pigments, flame retardants, hydrolysis inhibitors, fungistatic and bacteriostatic substances.

As catalysts, it is possible to use all compounds which accelerate the isocyanate-water reaction or the isocyanate-polyol reaction. Such compounds are known and are described, for example, in "Kunststoffhandbuch, volume 7, Polyurethane", Carl Hanser Verlag, 3rd edition 1993, chapter 3.4.1. These include amine-based catalysts and catalysts based on organic metal compounds. As catalysts based on organic metal compounds, it is possible to use, for example, organic tin compounds such as tin(II) salts of organic carboxylic acids, e.g. tin(II) acetate, tin(II) octoate, tin(II) ethylhexanoate and tin(II) laurate, and the dialkyltin(IV) salts of organic carboxylic acids, e.g. dibutyltin diacetate, dibutyltin dilaurate, dibutyltin maleate and dioctyltin diacetate, and also bismuth carboxylates such as bismuth(III) neodecanoate, bismuth 2-ethylhexanoate and bismuth octanoate or alkali metal salts of carboxylic acids, e.g. potassium acetate or potassium formate.

Preference is given to using a mixture comprising at least one tertiary amine as catalyst. These tertiary amines may also bear groups which are reactive toward isocyanate, e.g. OH, NH or $NH_2$ groups. Some of the most frequently used catalysts are bis(2-dimethylaminoethyl) ether, N,N,N,N,N-pentamethyldiethylenetriamine, N,N,N-triethylaminoethoxyethanol, dimethylcyclohexylamine, dimethylbenzylamine, triethylamine, triethylenediamine, pentamethyldipropylenetriamine, dimethylethanolamine, N-methylimidazole, N-ethylimidazole, tetramethylhexamethylenediamine, tris(dimethylaminopropyl)hexahydrotriazine, dimethylaminopropylamine, N-ethylmorpholine, diazabicycloundecene and diazabicyclononene. Preference is given to using mixtures comprising at least two different tertiary amines as catalysts.

Stabilizers are added to stabilize the polyurethane foam, examples are foam stabilizer and antioxidants. Foam stabilizers are materials which promote formation of a regular cell structure during foaming and are also called surfactants hereinafter. Examples are silicone-comprising foam stabilizers, also called silicon surfactants, such as siloxaneoxalkylene copolymers and other organopolysiloxanes. Also alkoxylation products of fatty alcohols, oxo alcohols, fatty amines, alkylphenols, dialkylphenols, alkylcresoles, alkylresorcinol, naphthol, alkylnaphthol, naphthylamine, aniline, alkylaniline, toluidine, bisphenol A, alkylated bisphenol A, polyvinyl alcohol and also alkoxylation products of condensation products of formaldehyde and alkylphenols, formaldehyde and dialkylphenols, formaldehyde and alkylcresoles, formaldehyde and alkylresorcinol, formaldehyde and aniline, formaldehyde and toluidine, formaldehyde and naphthol, formaldehyde and alkylnaphthol and also formaldehyde and bisphenol A or mixtures of two or more of these foam stabilizers. Foam stabilizers are preferably used in an amount of from 0.5 to 5 % by weight, particularly preferably from 1 to 3 % by weight, based on the total weight of the components.

Chain extenders and cross linkers have usually a molecular weight between 49 g/mol to 499 g/mol. Bifunctional chain extenders and the trifunctional and higher-functional cross linkers or, if appropriate, mixtures thereof might be added. Chain extenders and/or cross linkers used are preferably alkanol amines and in particular diols and/or triols having molecular weights preferably in between 60 g/mol to 300 g/mol.

Optionally flame retardants might be used as additives for the open-cell rigid foam. As flame retardants, it is generally possible to use the flame retardants known from the prior art. Suitable flame retardants are, for example, nonincorporable brominated substances, brominated esters, brominated ethers (Ixol) or brominated alcohols such as dibromoneopentyl alcohol, tribromoneopentyl alcohol and PHT-4-diol and also chlorinated phosphates such as tris(2-chloroethyl) phosphate, tris(2-chloropropyl) phosphate (TCPP), tris(1,3-dichloropropyl) phosphate, tricresyl phosphate, tris(2,3-dibromopropyl) phosphate, tetrakis(2-chloroethyl) ethylenediphosphate, dimethyl methanephosphonate, diethyl diethanolaminomethyl-phosphonate and also commercial halogen-comprising flame retardant polyols. It is possible to use phosphates or phosphonates such as diethyl ethanephosphonate (DEEP), triethyl phosphate (TEP), dimethyl propylphosphonate (DMPP), diphenyl cresyl phosphate (DPK) and others as further liquid flame retardants. Apart from the abovementioned flame retardants, it is possible to use inorganic or organic flame retardants such as red phosphorus, preparations comprising red phosphorus, aluminum oxide hydrate, antimony trioxide, arsenic oxide, ammonium polyphosphate and calcium sulfate, expandable graphite or cyanuric acid derivatives such as melamine, or mixtures of at least two flame retardants, e.g. ammonium polyphosphates and melamine and optionally maize starch or ammonium polyphosphate, melamine, expandable graphite and optionally aromatic polyesters for making the rigid polyurethane foams flame resistant. Preferable flame retardants are the recited phosphorus-containing flame retardants, particular preference being given to dimethyl propylphosphonate (DMPP), diethyl ethanephosphonate (DEEP), triethyl phosphate (TEP), diphenyl cresyl phosphate (DPK), triphenyl phosphate (TPP) and tris-(2-chloropropyl) phosphate (TCPP), with special preference being given to TCPP.

More detailed information regarding the starting materials, blowing agents, catalysts and auxiliaries and/or additives used to carry out the process according to the invention can be found, for example, in the Kunststoffhandbuch [Plastics Handbook], volume 7,"Polyurethane [Polyurethanes]" Carl-Hanser-Verlag München, 1st edition, 1966, 2nd edition, 1983 and 3rd edition, 1993.

Polyisocyanate (a)

The polyisocyanates (a) used may include any aliphatic, cycloaliphatic, aralaliphatic, and aromatic di- or polyfunctional isocyanates known from the prior art and any desired mixture of these. The polyisocyanates can optionally be modified.

Specific examples include alkylene diisocyanates having 4 to 12 carbon atoms in the alkylene radical, such as dodecane 1,12-diisocyanate, 2-ethyltetramethylene 1,4-diisocyanate, 2-methylpentamethylene 1,5-diisocyanate, tetramethylene 1,4-diisocyanate and preferably hexamethylene 1,6-diisocyanate; cycloaliphatic diisocyanates such as cyclohexane 1,3- and 1,4-diisocyanate and also any mixtures of these isomers, 1-isocyanato-3,3,5-trimethyl-5-isocyanatomethylcyclohexane (IPDI), hexahydrotolylene 2,4- and 2,6-diisocyanate and also the corresponding isomer mixtures, dicyclohexylmethane 4,4'-, 2,2'- and 2,4'-diisocyanate and also the corresponding isomer mixtures, and preferably aromatic di- and polyisocyanates such as, for example, tolylene 2,4- and 2,6-diisocyanate and the corresponding isomer mixtures, methylene diphenyl 4,4'-, 2,4'- and 2,2'-diisocyanate and the corresponding isomer mixtures, mixtures of methylene diphenyl 4,4'- and 2,2'-diisocyanates, polyphenylpolymethylene polyisocyanates, mixtures of methylene diphenyl 2,4'-, 2,4'- and 2,2'-diisocyanates and polyphenylpolymethylene polyisocyanates (crude MDI) and mixtures of crude MDI and tolylene diisocyanates. The organic di- or polyisocyanates can be used individually or in the form of their mixtures.

Use is frequently also made of modified polyfunctional isocyanates, i.e. products which are obtained by chemical reaction of organic polyisocyanates. Examples which may be mentioned are polyisocyanates comprising ester, urea, biuret, allophanate, carbodiimide, isocyanurate, uretdione, carbamate and/or urethane groups.

Furthermore, the polyisocyanates can also be applied in form of prepolymers. These polyisocyanate prepolymers are obtained by reacting the above-described polyisocyanates with compounds having at least two groups reactive towards isocyanate to a prepolymer.

Furthermore, prepolymers and mixtures of the above-described isocyanates and prepolymers can be used as the isocyanate component (a). These polyisocyanate prepolymers are obtainable by reacting polyisocyanates described above (component (a-1)) in excess, for example at temperatures of 30 to 100° C, preferably at about 45 to 60° C, with compounds having at least two groups reactive toward isocyanates (component (a-2)) to give the prepolymer. The prepolymers usually have an NCO content in the range of 14 to 32 % by weight, preferably in the range of 25 to 30 % by weight.

The compounds having at least two groups reactive towards isocyanate are known and are described, for example, in "Kunststoffhandbuch, 7, Polyurethane", Carl Hanser-Verlab, 3. Auflage 1993, Chapter 3.1. For example, polyether polyols and polyester polyols can be applied as compunds having at least two groups reactive towards isocyanate (a-2) in the preparation of the prepolymers.

Preferably, the compounds having at least two groups reactive towards isocyanate (a-2) are polyether polyols and/or polyester polyols containing OH groups deriving from propylene oxide, for example. The polyether polyols and/or polyester polyols preferably have a functionality in the range of 2 to 4, particularly preferably in the range of 2 to 3. Particularly preferably, the compounds having at least two groups reactive towards isocyanate are polyester polyols.

Preferred polyisocyanates are tolylene diisocyanate (TDI), methylene diphenyl diisocyanate (MDI), and especially mixtures of methylene diphenyl diisocyanate and polyphenylenepolymethylene polyisocyanates (polymeric MDI or PMDI) and/or related isocyanate prepolymers. Particularly preferably, the one or more polyisocyanates are selected from the group consisting of methylene diphenyl diisocyanates and/or its polymeric derivatives and/or related isocyanate prepolymers.

Very particular preference is given to employing polymeric MDI for the production of the open-cell rigid polyurethane foams according to the invention, for example Lupranat® M20 from BASF SE.

Preferred prepolymers are mixtures of polymeric MDI and polyester polyols. Very particular preference is given to a prepolymer comprising polymeric MDI and a polyester polyol containing monomeric units derived from dicarboxylic acids, fatty acids, and polyfunctional alcohols.

In one preferred configuration, the prepolymer comprises
92-97 % by weight of polymeric MDI and 3-8 % by weight of a polyester polyol containing monomeric units derived from dicarboxylic acids, fatty acids, and polyfunctional alcohols.

If isocyanate prepolymers are used as isocyanates, the content of compounds having groups which are reactive toward isocyanates is calculated with inclusion of the compounds having groups which are reactive toward isocyanates used for preparing the isocyanate prepolymers.

When producing the foams by the process according to the invention, the polyisocyanate and the isocyanate reactive compounds are reacted at an isocyanate index below 160. In a preferred embodiment, the polyisocyanate and isocyanate reactive compounds are reacted at an isocyanate index below 150, more preferred below 140, even more preferred below 130.

A further aspect of the present invention is an open-cell rigid polyurethane foam producible by the process for the production of an open-cell rigid polyurethane foam as defined above.

A further aspect of the present invention is the use of the open-cell rigid polyurethane foam produced by the process as defined above as a core material for vacuum insulation applications, for example vacuum insulation panels, as well as vacuum insulation panels comprising an open-cell rigid polyurethane foam produced by the process as defined above.

A further aspect of the present invention are vacuum insulation units for applications such as refrigerators and freezers, insulating boxes for hot and cold goods, insulation boards, water heaters, hot water storage tanks, and pipes, wherein the open-cell rigid polyurethane foam produced by the process as defined above is used as a core material for said vacuum insulation units.

A further aspect of the present invention is a process for the production of vacuum insulation panels, wherein the open-cell rigid polyurethane foam produced by the process as defined above is used as a core material for said vacuum insulation panels.

All above-listed embodiments and preferred embodiments are preferably freely combinable with one another, unless the context explicitly goes against this.

The expressions "comprising" and "comprises" preferably also encompass the expressions "consisting", "consisting of", and "consists of".

The invention is illustrated in more detail by the following examples without limiting the invention.

Examples

Measurement methods:
Measurement of hydroxyl number:
Hydroxyl numbers are determined according to DIN 53240 (1971-12).

Viscosity determination:
The viscosity of the polyols is determined, unless specified otherwise, at 25° C according to DIN EN ISO 3219 (1994) using a Haake Viscotester 550 with plate/cone measurement geometry (PK100) using the PK 1 1° cone (diameter: 28 mm; cone angle: 1° ) at a shear rate of 40 1/s.

Compressive strength:
Compressive strength is determined according to DIN ISO 844 EN DE (2014-11).

Open-cell content and measurement time

The determination of the open-cell content with corresponding measurement time was obtained in accordance with DIN EN ISO 4590.

Core density

The core density was determined by measuring the foam density in the core in accordance with DIN EN ISO 845.

Cream time:
The time from the commencement of mixing of the reaction mixture to the start of foam expansion.

Gel time (setting time/fiber time)

Time from the commencement of mixing of the reaction mixture up to the time until it is possible to draw threads in contact with the foam (for example with a wooden rod). This point thus represents the transition from a liquid to a solid state.

Raw materials

i) Polyols

Polyol A1: Polyether polyol based on sucrose, glycerol and propylene oxide (PO) having an OH number of 429 mg KOH/g; functionality: 6.0

Polyol A2: Polyether polyol based on sucrose, glycerol and PO having an OH number of 450 mg KOH/g; functionality: 5.1

Polyol B: Polyetheresterpolyol based on sucrose, glycerol, PO and biodiesel having an OH number 420 mg KOH/g; functionality: 4.5

Polyol C: Polyether polyol based on sucrose, glycerol and PO having an OH number of 490 mg KOH/g; functionality: 4.3

Polyol D: Polyether polyol based on glycerol and PO and ethylene oxide (EO) having an OH number of 158 mg KOH/g; functionality: 3

Polyol E: Polyester polyol based on adipinic acid, oleic acid, pentaerytrithol having an OH number of 30 mg KOH/g

Polyol J: Polyether polyol based on sucrose, biodiesel, glycerol and PO having an OH number 550 mg KOH/g; functionality: 4.5

Polyol K: Polyether polyol based on glycerol and PO having an OH number of 400; functionality: 3

ii) Catalysts

Catalyst F: Lupragen N 211 (BASF)
Catalyst G: Potassium acetate in MEG, 47% by weight

iii) Additives:

Silicon Surfactant H: Tegostab® B 84204 from Evonik (stabilizer)
Cell opening additive I: Ortegol® 501 from (Evonik)

iv) Isocyanate (polymer MDI)

Isocyanate 1: Lupranat® M20S; NCO content = 31.8 g/100 g from BASF
Isocyanate 2: mixture (prepolymer) of Lupranat M20 (95 % by weight) and Polyol E (5% by weight); NCO content = 29.6%

Components i) to iii) were mixed to give a polyol component and reacted with the isocyanate iv). The amounts of the feedstocks used can be found in table 1. CE denotes comparative examples, E denotes inventive examples. Mixing was affected in a mixing head or by means of stirring in a reservoir vessel. The reaction mixture was discharged into a laboratory mold having side lengths 418 mm x 700 mm x 455 mm and allowed to cure there.

Table 1

| Recipe | E1 | E 2 | E3 | CE 1 | CE 2 | E4 | CE 3 | CE 4 |
|---|---|---|---|---|---|---|---|---|
| Polyol A1 | 60.9 | 60.9 | | | | 60.9 | | 60.9 |
| Polyol A2 | | | 60.9 | | | | | |
| Polyol B | | | | 60.9 | | | | |
| Polyol C | | | | | 60.9 | | | |
| Polyol D | 35.0 | 35.0 | 35.0 | 35.0 | 35.0 | 35.0 | 35.0 | |
| Polyol J | | | | | | | 60.9 | |
| Polyol K | | | | | | | | 35.0 |
| Catalyst F | 0.5 | 0.5 | 0.5 | 0.5 | 0.5 | 0.5 | 0.5 | 0.5 |
| Catalyst G | 0.5 | 0.5 | 0.5 | 0.5 | 0.5 | 0.5 | 0.5 | 0.5 |
| Silicon surfactant H | 1 | 1 | 1 | 1 | 1 | 1 | 1 | 1 |
| Water | 2.1 | 2.1 | 2.1 | 2.1 | 2.1 | 2.1 | 2.1 | 2.1 |

(continued)

| Recipe | E1 | E 2 | E3 | CE 1 | CE 2 | E4 | CE 3 | CE 4 |
|---|---|---|---|---|---|---|---|---|
| Cell opening Polyol E | 5.00 | | 5.00 | 5.00 | 5.00 | | 5.0 | 5.0 |
| Cell opening additive I | | | | | | 2.00 | | |
| **Isocyanates** | | | | | | | | |
| Isocyanate 1 | 100.0 0 | | 100.0 0 | 100.0 0 | 100.0 0 | 100.0 0 | 100.0 | 100.0 |
| Isocyanate 2 | | 100.0 0 | | | | | | |
| **Process Paramater** | | | | | | | | |
| Index | 125.0 | 125.0 | 125.0 | 125.0 | 125.0 | 125.0 | 125.0 | 125.0 |
| Cream time [s] | 38 | 44 | 44 | 38 | 38 | 42 | 60 | 60 |
| Gel time [s] | 156 | 184 | 158 | 153 | 169 | 159 | 170 | 220 |
| Overall density [g/L] | 57.3 | 60.4 | 58.1 | 54.3 | 44.6 | 56.4 | 57.5 | 62.3 |
| **Foam Properties** | | | | | | | | |
| Compressive Strength [N/mm$^2$] | 0.289 | 0.291 | 0.241 | 0.242 | 0.180 | 0.257 | 0.267 | 0.329 |
| Core density [kg/mm$^3$] | 53.7 | 55.4 | 54.0 | 50.7 | 40.3 | 51.6 | 54.8 | 56.6 |
| Open cell content [%] | 85.7 | 82.9 | 81.1 | 21.2 | 63.7 | 97.0 | 100.0 | 84.8 |
| Measurement time [s] | 1922 | 1957 | 1991 | 1646 | 3594 | 1908 | 434 | 2344 |
| Foam stability | Good | Good | Good | Good | Good | Good | Collapse - foam core | Collapse - foam core |
| E: example; CE: comparative example. | | | | | | | | |

The examples according to the invention show that a process to produce open-cell polyurethane foams is significantly enhanced by using high-functional sugar polyols (e.g. E1 vs. CE 1 and CE2). A sufficient open-cell content is necessary for vacuum and VIP applications. Cell opening additive I, cell opening Polyol E and Isocyanate 2 based on cell opening Polyol E can all be applied within this approach. The accessibility of the open cells can be read from the measurement time for the level of open-cell content.

Furthermore, the high-functional sugar polyols A1 and A2 lead to high mechanical strength, which is crucial for the application as core materials for VIPs (see E1, E2 and E3 vs. CE1/CE2). By using high-functional sugar polyols, a high content of open cells in combination with a good mechanical strength is obtained, which is essential for vacuum and VIP applications.

## Claims

1. A process for the production of an open-cell rigid polyurethane foam by reacting at least

   a. at least one polyisocyanate;
   b. a polyol composition comprising at least

      i. 30% to 75% by weight of at least one polyether polyol (b-1) having a functionality in the range of 5.0 to 7.9 and an OH number in the range of 300 to 490 mg KOH/g determined according to DIN 53240 (1971-12) and containing monomeric units derived from monosaccharides, oligosaccharides, polysaccharides and/or sugar alcohols;

ii. >0% to 69.5% by weight of at least one polyether polyol (b-2) having an OH number in the range of >0 to 250 mg KOH/g; and

iii. at least 0.5% by weight of water; and

c. a cell opening agent;

where the isocyanate index is below 160 and the concentrations in % by weight for (b-1), (b-2), and water are based on the total amount of the components of the polyol composition.

2. The process according to claim 1, wherein the polyether polyol (b-1) is a reaction product of monosaccharides, oligosaccharides, polysaccharides, sugar alcohols, alkoxylation products of the aforementioned compounds, mixtures thereof or mixtures of the aforementioned compounds with polyhydric alcohols or their alkoxylation products with $C_2$ to $C_4$ alkylene oxides.

3. The process according to any of claims 1 to 2, wherein the polyether polyol (b-1) has an OH number in the range of 350 to 490 mg KOH/g.

4. The process according to any of claims 1 to 3, wherein the monosaccharides, oligosaccharides, polysaccharides and/or sugar alcohols are selected from the group consisting of sucrose, lactose, maltose, glucose, allose, altrose, gulose, idose, galactose, talose, fructose, sorbose, tagatose, mannose, psicose, and sorbitol.

5. The process according to any of claims 1 to 4, wherein the amount of the monosaccharides, oligosaccharides, polysaccharides and/or sugar alcohols is 30 to 70 % by weight based on the total amount of the polyether polyol (b-1).

6. The process according to any of claims 1 to 5, wherein the polyether polyol (b-1) contains monomeric units derived from polyhydric alcohols selected from the group consisting of ethylene glycol, diethylene glycol, triethylene glycol, propylene glycol, dipropylene glycol, tripropylene glycol, glycerol, trimethylolpropane, butane-1,4-diol, butane-1,3-diol, butane-1,2-diol, butane-2,3-diol, butane-1,2,4-triol, pentane-1,3,5-triol, pentaerythritol, and erythritol.

7. The process according to any of claims 1 to 6, wherein the polyether polyol (b-2) is a reaction product of amines, polyhydric alcohols, alkoxylation products of the aforementioned products or mixtures thereof with $C_2$ to $C_4$ alkylene oxides.

8. The process according to any of claims 1 to 7, wherein the polyether polyol (b-2) contains monomeric units derived from polyhydric alcohols selected from the group consisting of ethylene glycol, diethylene glycol, triethylene glycol, propylene glycol, dipropylene glycol, tripropylene glycol, glycerol, trimethylolpropane, butane-1,4-diol, butane-1,3-diol, butane-1,2-diol, butane-2,3-diol,butane-1,2,4-triol, and pentane-1,3,5-triol.

9. The process according to any of claims 1 to 8, wherein the polyether polyol (b-2) has a functionality in the range of 1.9 to 6.5.

10. The process according to any of claims 1 to 9, wherein the cell opening agent is selected from macromolecular compounds or mixtures of macromolecular compounds based at least partially on saturated or unsaturated hydrocarbons or silioxane motifs; polyester polyols containing monomeric units derived from a dicarboxylic acid, a fatty acid, and a polyfunctional alcohol; and/or prepolymers comprising a polyisocyanate and a polyester polyol containing monomeric units derived from a dicarboxylic acid, a fatty acid, and a polyfunctional alcohol.

11. The process according to any of claims 1 to 10, wherein water is the only blowing agent present in the reaction.

12. The process according to any of claims 1 to 10, wherein a physical blowing agent and/or a chemical blowing agent other than water is present in the reaction.

13. The process according to any of claims 1 to 12, wherein the one or more polyisocyanates are selected from the group consisting of methylene diphenyl diisocyanates and/or its polymeric derivatives and/or related isocyanate prepolymers.

**14.** The process according to any of claims 1 to 13, wherein the isocyanate index is below 130.

**15.** The process according to any of claims 1 to 14, wherein the process is a slab stock process.

**16.** An open-cell rigid polyurethane foam producible by the process according to any of claims 1 to 15.

**17.** Use of the open-cell rigid polyurethane foam produced according to any of claims 1 to 15 or of the open-cell polyurethane foam according to claim 16 as a core material for vacuum insulation panels.

**18.** Vacuum insulation panels comprising an open-cell rigid polyurethane foam produced by the process according to any of claims 1 to 15 or the open-cell rigid polyurethane foam according to claim 16.

**Patentansprüche**

**1.** Verfahren zur Herstellung eines offenzelligen Polyurethan-Hartschaumstoffs durch Umsetzung von mindestens

    a. mindestens einem Polyisocyanat;
    b. einer Polyolzusammensetzung, umfassend mindestens

        i. 30 bis 75 Gew.-% mindestens eines Polyetherpolyols (b-1), das eine Funktionalität im Bereich von 5,0 bis 7,9 und eine OH-Zahl im Bereich von 300 bis 490 mg KOH/g, bestimmt gemäß DIN 53240 (1971-12), aufweist und monomere Einheiten, die sich von Monosacchariden, Oligosacchariden, Polysacchariden und/oder Zuckeralkoholen ableiten, enthält;
        ii. > 0 bis 69,5 Gew.-% mindestens eines Polyetherpolyols (b-2), das eine OH-Zahl im Bereich von > 0 bis 250 mg KOH/g aufweist; und
        iii. mindestens 0,5 Gew.-% Wasser; und

    c. einen Zellöffner;

wobei der Isocyanatindex unter 160 liegt und sich die Konzentrationen in Gew.-% für (b-1), (b-2) und Wasser auf die Gesamtmenge der Komponenten der Polyolzusammensetzung beziehen.

**2.** Verfahren nach Anspruch 1, wobei es sich bei dem Polyetherpolyol (b-1) um ein Umsetzungsprodukt von Monosacchariden, Oligosacchariden, Polysacchariden, Zuckeralkoholen, Alkoxylierungsprodukten der vorgenannten Verbindungen, Mischungen davon oder Mischungen der vorgenannten Verbindungen mit mehrwertigen Alkoholen oder deren Alkoxylierungsprodukten mit $C_2$ bis $C_4$-Alkylenoxiden handelt.

**3.** Verfahren nach einem der Ansprüche 1 bis 2, wobei das Polyetherpolyol (b-1) eine OH-Zahl im Bereich von 350 bis 490 mg KOH/g aufweist.

**4.** Verfahren nach einem der Ansprüche 1 bis 3, wobei die Monosaccharide, Oligosaccharide, Polysaccharide und/oder Zuckeralkohole aus der Gruppe bestehend aus Saccharose, Lactose, Maltose, Glucose, Allose, Altrose, Gulose, Idose, Galactose, Talose, Fructose, Sorbose, Tagatose, Mannose, Psicose und Sorbitol ausgewählt sind.

**5.** Verfahren nach einem der Ansprüche 1 bis 4, wobei die Menge der Monosaccharide, Oligosaccharide, Polysaccharide und/oder Zuckeralkohole 30 bis 70 Gew.-%, bezogen auf die Gesamtmenge des Polyetherpolyols (b-1), beträgt.

**6.** Verfahren nach einem der Ansprüche 1 bis 5, wobei das Polyetherpolyol (b-1) monomere Einheiten enthält, die sich von mehrwertigen Alkoholen ableiten, die aus der Gruppe bestehend aus Ethylenglykol, Diethylenglykol, Triethylenglykol, Propylenglykol, Dipropylenglykol, Tripropylenglykol, Glycerin, Trimethylolpropan, Butan-1,4-diol, Butan-1,3-diol, Butan-1,2-diol, Butan-2,3-diol, Butan-1,2,4-triol, Pentan-1,3,5-triol, Pentaerythritol und Erythritol ausgewählt sind.

**7.** Verfahren nach einem der Ansprüche 1 bis 6, wobei es sich bei dem Polyetherpolyol (b-2) um ein Umsetzungsprodukt von Aminen, mehrwertigen Alkoholen, Alkoxylierungsprodukten der vorgenannten Produkte oder Mischungen davon mit $C_2$- bis $C_4$-Alkylenoxiden handelt.

8. Verfahren nach einem der Ansprüche 1 bis 7, wobei das Polyetherpolyol (b-2) monomere Einheiten enthält, die sich von mehrwertigen Alkoholen ableiten, die aus der Gruppe bestehend aus Ethylenglykol, Diethylenglykol, Triethylenglykol, Propylenglykol, Dipropylenglykol, Tripropylenglykol, Glycerin, Trimethylolpropan, Butan-1,4-diol, Butan-1,3-diol, Butan-1,2-diol, Butan-2,3-diol, Butan-1,2,4-triol und Pentan-1,3,5-triol ausgewählt sind.

9. Verfahren nach einem der Ansprüche 1 bis 8, wobei das Polyetherpolyol (b-2) eine Funktionalität im Bereich von 1,9 bis 6,5 aufweist.

10. Verfahren nach einem der Ansprüche 1 bis 9, wobei der Zellöffner aus makromolekularen Verbindungen oder Mischungen makromolekularer Verbindungen, die zumindest teilweise auf gesättigten oder ungesättigten Kohlenwasserstoffen oder Siloxaneinheiten basieren; Polyesterpolyolen, die monomere Einheiten enthalten, die sich von einer Dicarbonsäure, einer Fettsäure und einem polyfunktionellen Alkohol ableiten; und/oder Prepolymeren, die ein Polyisocyanat und ein Polyesterpolyol mit monomeren Einheiten, die sich von einer Dicarbonsäure, einer Fettsäure und einem polyfunktionellen Alkohol ableiten, umfassen, ausgewählt wird.

11. Verfahren nach einem der Ansprüche 1 bis 10, wobei Wasser das einzige bei der Umsetzung vorliegende Treibmittel ist.

12. Verfahren nach einem der Ansprüche 1 bis 10, wobei bei der Umsetzung ein physikalisches Treibmittel und/oder ein chemisches Treibmittel, das von Wasser verschieden ist, vorliegt.

13. Verfahren nach einem der Ansprüche 1 bis 12, wobei das eine oder die mehreren Polyisocyanate aus der Gruppe bestehend aus Methylendiphenyldiisocyanaten und/oder deren polymeren Derivaten und/oder verwandten Isocyanatprepolymeren ausgewählt werden.

14. Verfahren nach einem der Ansprüche 1 bis 13, wobei der Isocyanatindex unter 130 liegt.

15. Verfahren nach einem der Ansprüche 1 bis 14, wobei es sich bei dem Verfahren um ein Blockverfahren handelt.

16. Offenzelliger Polyurethan-Hartschaumstoff, herstellbar nach dem Verfahren nach einem der Ansprüche 1 bis 15.

17. Verwendung des nach einem der Ansprüche 1 bis 15 hergestellten offenzelligen Polyurethan-Hartschaumstoffs oder des offenzelligen Polyurethanschaumstoffs nach Anspruch 16 als Kernmaterial für Vakuumisolationspaneele.

18. Vakuumisolationspaneele, umfassend einen nach einem der Ansprüche 1 bis 15 hergestellten offenzelligen Polyurethan-Hartschaumstoff oder den offenzelligen Polyurethan-Hartschaumstoff nach Anspruch 16.

**Revendications**

1. Procédé pour la production d'une mousse rigide de polyuréthane à alvéoles ouvertes par réaction d'au moins

    **a.** au moins un polyisocyanate ;
    **b.** une composition de polyols comprenant au moins

        **i.** 30 % à 75 % en poids d'au moins un polyol de polyéther (b-1) ayant une fonctionnalité dans la plage de 5,0 à 7,9 et un indice d'OH déterminé selon la norme DIN 53240 (1971-12) dans la plage de 300 à 490 mg de KOH/g et contenant des unités monomères dérivées de monosaccharides, d'oligosaccharides, de polysaccharides et/ou d'alcools de sucre ;
        ii. > 0 % à 69,5 % en poids d'au moins un polyol de polyéther (b-2) ayant un indice d'OH dans la plage de > 0 à 250 mg de KOH/g ; et
        iii. au moins 0,5 % en poids d'eau ; et

    c. un agent d'ouverture des alvéoles ;

l'indice d'isocyanate étant au-dessous de 160 et les concentrations en % en poids pour (b-1), (b-2) et l'eau étant par rapport à la quantité totale des composants de la composition de polyols.

**2.** Procédé selon la revendication 1, dans lequel le polyol de polyéther (b-1) est un produit de réaction de monosaccharides, d'oligosaccharides, de polysaccharides, d'alcools de sucre, de produits d'alcoxylation des composés susmentionnés, de mélanges de ceux-ci ou de mélanges des composés susmentionnés avec des polyalcools ou leurs produits d'alcoxylation avec des oxydes d'alkylène en $C_2$ à $C_4$.

**3.** Procédé selon l'une quelconque des revendications 1 à 2, dans lequel le polyol de polyéther (b-1) a un indice d'OH dans la plage de 350 à 490 mg de KOH/g.

**4.** Procédé selon l'une quelconque des revendications 1 à 3, dans lequel les monosaccharides, les oligosaccharides, les polysaccharides et/ou les alcools de sucre sont choisis dans le groupe constitué par le saccharose, le lactose, le maltose, le glucose, l'allose, l'altrose, le gulose, l'idose, le galactose, le talose, le fructose, le sorbose, le tagatose, le mannose, le psicose et le sorbitol.

**5.** Procédé selon l'une quelconque des revendications 1 à 4, dans lequel la quantité des monosaccharides, oligosaccharides, polysaccharides et/ou alcools de sucre est de 30 à 70 % en poids par rapport à la quantité totale du polyol de polyéther (b-1).

**6.** Procédé selon l'une quelconque des revendications 1 à 5, dans lequel le polyol de polyéther (b-1) contient des unités monomères dérivées de polyalcools choisis dans le groupe constitué par l'éthylèneglycol, le diéthylèneglycol, le triéthylèneglycol, le propylèneglycol, le dipropylèneglycol, le tripropylèneglycol, le glycérol, le triméthylolpropane, le butane-1,4-diol, le butane-1,3-diol, le butane-1,2-diol, le butane-2,3-diol, le butane-1,2,4-triol, le pentane-1,3,5-triol, le pentaérythritol et l'érythritol.

**7.** Procédé selon l'une quelconque des revendications 1 à 6, dans lequel le polyol de polyéther (b-2) est un produit de réaction d'amines, de polyalcools, de produits d'alcoxylation des produits susmentionnés ou de mélanges de ceux-ci avec des oxydes d'alkylène en $C_2$ à $C_4$.

**8.** Procédé selon l'une quelconque des revendications 1 à 7, dans lequel le polyol de polyéther (b-2) contient des unités monomères dérivées de polyalcools choisis dans le groupe constitué par l'éthylèneglycol, le diéthylèneglycol, le triéthylèneglycol, le propylèneglycol, le dipropylèneglycol, le tripropylèneglycol, le glycérol, le triméthylolpropane, le butane-1,4-diol, le butane-1,3-diol, le butane-1,2-diol, le butane-2,3-diol, le butane-1,2,4-triol et le pentane-1,3,5-triol.

**9.** Procédé selon l'une quelconque des revendications 1 à 8, dans lequel le polyol de polyéther (b-2) a une fonctionnalité dans la plage de 1,9 à 6,5.

**10.** Procédé selon l'une quelconque des revendications 1 à 9, dans lequel l'agent d'ouverture des alvéoles est choisi parmi les composés macromoléculaires ou les mélanges de composés macromoléculaires à base au moins partiellement d'hydrocarbures saturés ou insaturés ou de motifs siloxane ; les polyols de polyesters contenant des unités monomères dérivées d'un acide dicarboxylique, d'un acide gras et d'un alcool polyfonctionnel ; et/ou les prépolymères comprenant un polyisocyanate et un polyol de polyester contenant des unités monomères dérivées d'un acide dicarboxylique, d'un acide gras et d'un alcool polyfonctionnel.

**11.** Procédé selon l'une quelconque des revendications 1 à 10, dans lequel l'eau est le seul agent gonflant présent dans la réaction.

**12.** Procédé selon l'une quelconque des revendications 1 à 10, dans lequel un agent gonflant physique et/ou un agent gonflant chimique autre que l'eau sont présents dans la réaction.

**13.** Procédé selon l'une quelconque des revendications 1 à 12, dans lequel le ou les polyisocyanates sont choisis dans le groupe constitué par les diisocyanates de diphénylméthane et/ou leurs dérivés polymères et/ou les prépolymères d'isocyanate apparentés.

**14.** Procédé selon l'une quelconque des revendications 1 à 13, dans lequel l'indice d'isocyanate est au-dessous de 130.

**15.** Procédé selon l'une quelconque des revendications 1 à 14, le procédé étant un procédé de production de blocs en continu.

**16.** Mousse rigide de polyuréthane à alvéoles ouvertes pouvant être produite par le procédé selon l'une quelconque des revendications 1 à 15.

17. Utilisation de la mousse rigide de polyuréthane à alvéoles ouvertes produite selon l'une quelconque des revendications 1 à 15 ou de la mousse de polyuréthane à alvéoles ouvertes selon la revendication 16 en tant que matériau d'âme pour des panneaux isolants sous vide.

18. Panneaux isolants sous vide comprenant une mousse rigide de polyuréthane à alvéoles ouvertes produite par le procédé selon l'une quelconque des revendications 1 à 15 ou la mousse rigide de polyuréthane à alvéoles ouvertes selon la revendication 16.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3560970 A1
- EP 2072548 B1
- WO 19110631 A1
- US 5690855 A
- EP 2542612 A

### Non-patent literature cited in the description

- Polyurethane Handbook. Carl Hanser Verlag, 1993
- **M. LONESCU**. Chemistry and Technology of Polyols for Polyurethanes. Rapra Technology Limited, 2005, 34-39
- **M. LONESCU**. Chemistry and technology of polyols for polyurethanes. Rapra Technology Ltd., 2005
- Polyurethane. Kunststoffhandbuch. Carl Hanser Verlag, 1993, vol. 7
- Polyurethane [Polyurethanes. Kunststoffhandbuch [Plastics Handbook. Carl-Hanser-Verlag, 1966, vol. 7
- Polyurethane. Kunststoffhandbuch. Carl Hanser-Verlab, 1993, vol. 7